Europäisches Patentamt

European Patent Office

Office européen des brevets

(11) Publication number: 0 347 838
A2

# EUROPEAN PATENT APPLICATION

(21) Application number: 89111205.4

(51) Int. Cl.4: **G02B 17/08 , G02B 21/02**

(22) Date of filing: 20.06.89

(30) Priority: 21.06.88 JP 153033/88
21.06.88 JP 153034/88

(43) Date of publication of application:
27.12.89 Bulletin 89/52

(84) Designated Contracting States:
DE FR GB IT

(71) Applicant: **Dainippon Screen Mfg. Co., Ltd.**
**1-1, Tenjinkitamachi Teranouchi-Agaru**
**4-chome Horikawa-Dori**
**Kamikyo-ku Kyoto 602(JP)**

(72) Inventor: **Hayashi, Takahisa Dainippon Screen**
**Mfg. Co., Ltd.**
**1-1, Tenjinkitamachi Teranouchi-Agaru**
**4-chome**
**Horikawa Dori Kamikyo-ku Kyoto(JP)**

(74) Representative: **Goddar, Heinz J., Dr. et al**
**FORRESTER & BOEHMERT**
**Widenmayerstrasse 4/I**
**D-8000 München 22(DE)**

(54) **Objective lens system for microscope.**

(57) The present invention is directed to an objective lens system for a microscope. The objective lens system comprises: a first lens group (21) which includes a meniscus lens made of quartz or fluorite having a positive power; and a second lens group (22) including a biconcave lens (23) made of quartz and a biconvex lens 24) made of fluorite. In the objective lens system, said first lens group (21), said biconcave (23) and biconvex (24) lenses are successively disposed in that order from the object side of the objective lens system through air. Accordingly, the objective lens system can transmit ultraviolet and/or far ultraviolet rays and can correct chromatic aberration, which is cheaply provided.

FIG.4

Xerox Copy Centre

## Objective Lens System for Microscope

## BACKGROUND OF THE INVENTION

Field of the Invention

The present invention relates to an objective lens system for a microscope, which is employable in an ultraviolet region, particularly in a far ultraviolet region of less than 300 nm in wavelength.

Description of the Prior Art

Most of conventional objective lenses for microscopes cannot be used in ultraviolet and far ultraviolet regions, although the same are employable in visible and infrared regions. This is because most of optical glass materials transmit no shorter-wavelength rays whose wavelengths are shorter than 300 nm, i.e., ultraviolet and far ultraviolet rays

In a microscope, assuming that the numerical aperture (NA) of its objective lens remains constant, the level of the resolution limit is increased as the wavelength is shortened. Therefore, it is possible to observe a sample in detail by shortening the wavelength of illuminating and observed rays. Further, it is appreciated that samples in a larger number will emit fluorescence when exposed to ultraviolet rays, than when exposed to visible rays. In order to obtain a larger amount of information by ·observing a sample through a microscope, therefore, provision of a microscope also employable in the ultraviolet region is desired. To this end, an objective lens employable in the ultraviolet and far ultraviolet regions is required. Therefore, the following first to third objective lenses for microscopes have been generally employed:

First Prior Art Example

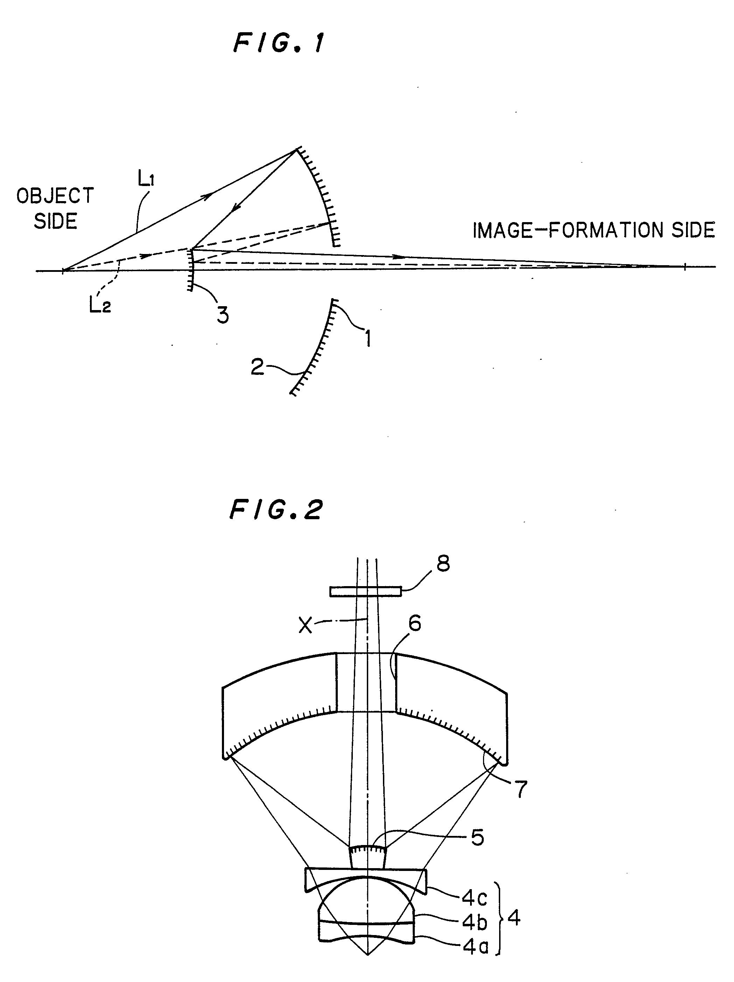

Fig. 1 is a block diagram showing an objective lens for a microscope according to a first prior art example, which is described in "Lens Design Fundamentals" by Rudolf Kingslake, Academic Press, 1978, p. 333.

As shown in Fig. 1, the objective lens is of a reflection type, which is formed by a first reflecting mirror 2 having an aperture 1 and a second reflecting mirror 3 for further reflecting light reflected by the first reflecting mirror 2 and guiding the same to an image-formation side (right-hand side of the figure) through the aperture 1.

Light $L_1$ applied to the objective lens from an object side (left-hand side of the figure) is reflected by the first reflecting mirror 2 and guided to the second reflecting mirror 3. The reflected light is further reflected by the second reflecting mirror 3 and guided to the image-formation side, to be imaged in a prescribed position.

According to the first prior art example, the objective lens is formed by only the first and second reflecting mirrors 2 and 3, to provide an objective lens for a microscope which has excellent performance with no chromatic aberration and is employable also in the ultraviolet region.

However, since the objective lens having the aforementioned structure cannot make the object side telecentric, the quantity of light may be reduced around the visual field and the magnification is varied with irregularity on the surface of the sample. Further, since the second reflecting mirror 3 is provided on an optical axis X, light $L_2$ outgoing from the object side to the first reflecting mirror 2 is cut off by the second reflecting mirror 3 as shown in Fig. 1. Thus, the central light $L_2$ within the beam outgoing from the object side cannot contribute to image formation and the quantity of light is reduced in the imaging position. Further, resolving power is reduced by diffraction. When a plurality of the aforementioned objective lenses are arranged in a turret manner in a microscope to switch the magnification by switching the objective lenses, pupil diameters and focal distances cannot be simultaneously unified between the objective lenses. Consequently, the degrees of freedom in design of the objective lenses are reduced as compared with the case of forming an objective lens for a microscope by a glass system.

Second and Third Prior Art Examples

Fluorite, quartz, lithium fluoride (LiF), barium fluoride (BaF$_2$), sodium chloride (NaCl) and the like are known as optical materials transmittable of ultraviolet and far ultraviolet rays Thus, objective lenses are made of such optical materials to transmit ultraviolet and far ultraviolet rays.

Fig. 2 is a block diagram showing an objective lens for a microscope according to a second prior art example, which is described in "Applied Optics and Optical Engineering III" supervised by Kingslake, Academic Press, 1965, p. 173.

As shown in Fig. 2, this objective lens is formed by a refracting lens system 4, a first reflecting mirror 5, a second reflecting mirror 7 having an aperture 6 and a fourth lens 8 made of quartz. These elements 4, 5, 7 and 8 are arranged on an axis X in this order. The refracting lens system 4 is formed by a first lens 4a made of quartz having negative power, a second lens 4b made of fluorite having positive power, which is joined to the first lens 4a, and a third lens 4c made of fluorite having negative power, which is adjacent to the second lens 4b.

Light outgoing from an object side (lower side of the figure) is guided to the second reflecting mirror 7 through the refracting lens system 4. Light reflected by the second reflecting mirror 7 is further reflected by the first reflecting mirror 5 and guided to an image formation side (upper side of the figure) through the aperture 6 and the fourth lens 8, to be imaged in a prescription position.

As hereinabove described, it is necessary to join the first and second lenses 4a and 4b with each other in the second prior art example. Since there is no adhesive which can transmit ultraviolet and far ultraviolet rays at present, the junction surfaces must be brought into optical contact with each other, to cause no reflection at the junction surface. Thus, the junction surfaces must be finished in high accuracy, whereby the cost for the objective lens is increased. Further, since light of a central portion is cut off by the first reflecting mirror 5 within the light outgoing from the object side similarly to the first prior art example, both of resolving power and the quantity of light are reduced.

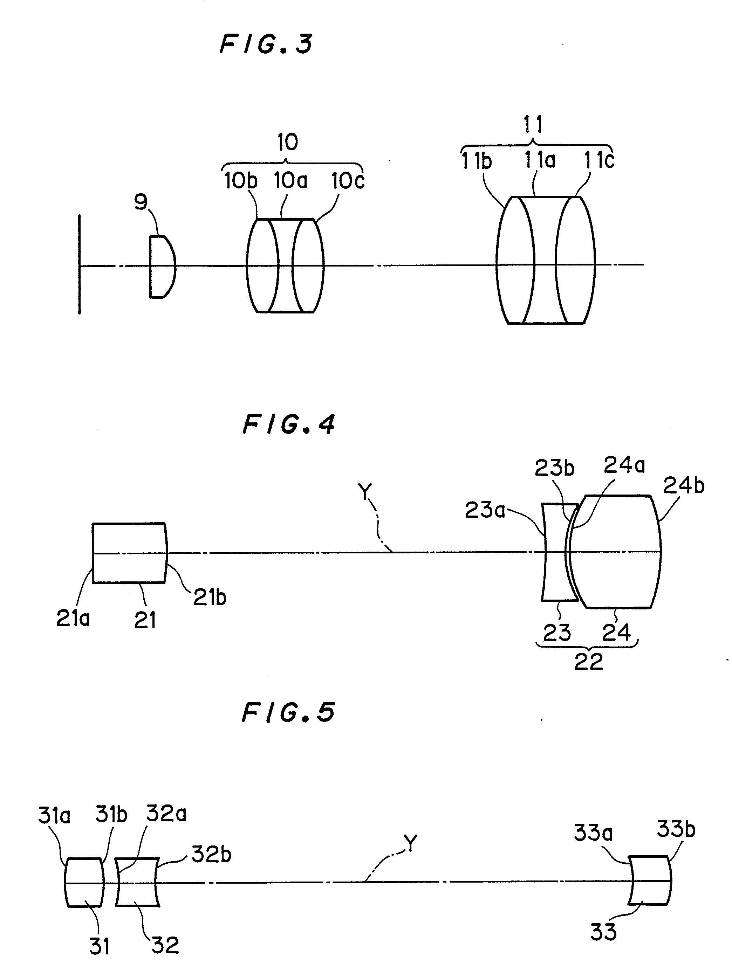

Fig. 3 is a block diagram showing an objective lens for a microscope according to a third prior art example, which is described in Hikari Gijutsu Contact Vol. 25, No. 2, February 1987, p. 137.

As shown in Fig. 3, this objective lens is formed by a first lens 9 made of fluorite and second and third lens groups 10 and 11, which are arranged in this order from an object side toward an image formation side. The second lens group 10 is formed by holding a concave lens 10a made of quartz by convex lenses 10b and 10c made of fluorite and joining the same with each other. The third lens group 11 is formed by holding a concave lens 11a made of quartz by convex lenses 11b and 11c made of fluorite and joining the same with each other, similarly to the second lens group 10.

Thus, light outgoing from the object side (left-hand side of the figure) toward the objective lens is imaged in a prescribed position through the first lens 9 and the second and third lens groups 10 and 11.

As hereinabove described, the second lens group 10 is formed by the concave lens 10a made of quartz and the convex lenses 10b and 10c made of fluorite while the third lens group 11 is formed by the concave lens 11a made of quartz and the convex lenses 11b and 11c made of fluorite, whereby chromatic aberration can be corrected. In the second lens group 10, however, the convex lens 10b, the concave lens 10a and the convex lens 10c must be brought into optical contact with each other, similarly to the second prior art example. In the third lens group 11, further, the convex lens 11b, the concave lens 11a and the convex lens 11c must be brought into optical contact with each other. Thus, the junction surfaces must be finished in high accuracy, and hence the cost for the objective lens is increased.

## SUMMARY OF THE INVENTION

The present invention is directed to an objective lens system for a microscope. The objective lens comprises: a first lens group which includes a lens in the form of meniscus made of quartz of fluorite having a concave surface which is directed to an object and lens having a positive power; and a second lens group including a biconcave lens made of quartz and a biconvex lens made of fluorite. In the objective lens system, the first lens group, the biconcave and biconvex lenses are successively disposed in order from the object side of the objective lens system through air. Further, the objective lens system satisfies the following:

$$\phi_1 > 0$$
$$\phi_2 > 0$$
$$0.35\phi < \phi_2 < 0.92\phi$$
$$1.05L\phi < (\phi_1 + \phi_2) / \phi < 1.15L\phi$$
$$0.9 < |\phi_{2+} / \phi_{2-}| < 1.2$$

where $\phi_1$, $\phi_2$ and $\phi$ are a power of the first lens group, the second lens group and the objective lens system, respectively; L is a distance between the object and focal point in the image formation side of the objective lens system ; and $\phi_{2+}$, $\phi_{2-}$ are a power of the biconvex lens and the biconcave lens, respectively.

In an aspect of the present invention, the objective lens system comprises: a first lens group including a first lens made of quartz having a negative power and a first biconvex lens made of quartz or fluorite; and a second lens group including a second biconcave lens made of quartz and a second biconvex lens made of fluorite. The first lens of the first lens group is of a first biconcave lens or is of a lens in the form of meniscus having a convex surface which is directed to an object.

In the objective lens system, the first lens, the first biconvex lens, the second biconcave lens and the second biconvex lens are successively disposed in order from the object side of the objective lens through air. Further, the objective lens system satisfies the following: $\phi_1 > 0$

$\phi_2 > 0$

$0.35\phi < \phi_2 < 0.9\phi$

$1.05L\phi < (\phi_1 + \phi_2)/\phi < 1.15L\phi$

$1.45 < | \phi_{1+} / \phi_{1-} | < 1.65$

$0.8 < | \phi_{2+} / \phi_{2-} | < 1.1$

where $\phi_1$, $\phi_2$ and $\phi$ are a power of the first lens group, the second lens group and the objective lens system, respectively; L is a distance between the object and focal point in the image formation side of the objective lens system; $\phi_{1+}$, $\phi_{1-}$ are a power of the first biconvex lens and the first lens, respectively; and $\phi_{2+}$, $\phi_{2-}$ are a power of the second biconvex lens and the second biconcave lens, respectively.

Further, the present invention is directed to an apparatus for measuring thickness of a film which is formed on a sample, also. The measuring apparatus comprises a light source for illuminating the sample which projects light having ultraviolet and/or far ultraviolet rays; a microscopic optical system for imaging observed light outgoing from the sample, which includes the aforementioned objective lens system according to the present invention; spectroscopic means for taking in the observed light through the microscopic optical system and separating the observed light into spectral components; detector means for detecting the spectrum of the observed light separated into spectral components by the specroscopic means; and arithmetic means for obtaining thickness of the film on the basis of data outputted from the detector means.

Accordingly, an object of the present invention is to cheaply provide an objective lens system for a microscope which can transmit ultraviolet and/or far ultraviolet rays and can correct chromatic aberration.

Another object of the present invention is to provide an objective lens system for a microscope, which achieves the above object and can further correct spherical aberration.

It is further another object to provide an apparatus for measuring thichness of a film which is formed on a sample, which can accurately measure thickness of a film with ultraviolet and/or ultraviolet rays.

BRIEF DESCRIPTION OF THE DRAWINGS

Fig. 1 is a block diagram showing an objective lens for a microscope according to a first prior art example;

Fig. 2 is a block diagram showing an objective lens for a microscope according to a second prior art example;

Fig. 3 is a block diagram showing an objective lens for a microscope according to a third prior art example;

Fig. 4 is an arrangement view showing a first example of an objective lens system according to the first embodiment of the present invention,

Fig. 5 is a block diagram showing the image formation lens system;

Figs. 6A, 6B, 6C and 6D illustrate spherical aberration, sine condition, astigmatism and distortion aberration of the objective lens system for a microscope shown in Fig. 4, respectively;

Fig. 7 is an arrangement view showing a second example of an objective lens system according to the first embodiment of the present invention;

Figs. 8A, 8B, 8C and 8D illustrate spherical aberration, sine condition, astigmatism and distortion aberration of the objective lens system for a microscope shown in Fig. 7, respectively;

Fig. 9 is an arrangement view showing an example of an objective lens system according to the second embodiment of the present invention;

Figs. 10A, 10B, 10C and 10D illustrate spherical aberration, sine condition, astigmatism and distortion aberration of the objective lens system for a microscope shown in Fig. 9, respectively;

Fig. 11 is an arrangement view showing another example of an objective lens system according to the second embodiment of the present invention;

Figs. 12A, 12B, 12C and 12D illustrate spherical aberration, sine condition, astigmatism and distortion aberration of the objective lens system for a microscope shown in Fig. 11, respectively;

Fig. 13 is a schematic block diagram showing a system for measuring film thickness; and

Fig. 14 is a flow chart showing a method of measuring film thickness by the system shown in Fig. 13.

## DESCRIPTION OF THE PREFERRED EMBODIMENTS

## A. First Embodiment

An objective lens system for a microscope according to a first embodiment of the present invention comprises a first lens group formed by a meniscus lens made of quartz or fluorite which has a positive power and a second lens group formed by a biconcave lens made of quartz and a biconvex lesn made of fluorite. These first lens group, biconcave lens and biconvex lens are arranged in this order from an object side toward an image formation side. Further, a concave side of the first lens group is directed to the object side. The biconcave lens is separated from an image formation side of the first group lens with a space through air while the biconvex lens is separated from an image formation side of the biconcave lens with a space through air.

The aforementioned objective lens satisfies the following conditions:

$$\phi_1 > 0$$
$$\phi_2 > 0$$
$$0.35\phi < \phi_2 < 0.92\phi$$
$$1.05L\phi < (\phi_1 + \phi_2) / \phi < 1.15L\phi$$
$$0.9 < |\phi_{2+} / \phi_{2-}| < 1.2$$

where

$\phi_1$ : power of first lens group

$\phi_2$ : power of second lens group

$\phi$ : power of objective lens system

$L$ : distance between object plane and image side focal point of lens system

$\phi_{2+}$: power of biconvex lens forming second lens group

$\phi_{2-}$: power of biconcave lens forming second lens group

The power $\phi_2$ of the second lens group is set to be less than 92 % and in excess of 35 % of the power $\phi$ of the objective lens system. This is because the working distance is reduced if the power $\phi_2$ exceeds 92 % of the power $\phi$ while the full length of the objective lens system is rendered excessive as compared with the focal length is the power $\phi_2$ is less than 35 % of the power.

A value $(\phi_1 + \phi_2)/\phi$ is set to be less than 115 % and in excess of 105 % of a value obtained by multiplying the power $\phi$ of the objective lens system the distance L between the object plane and the image side focal point of the objective lens system. This is because the curvature of an image surface is excessively increased due to increase in a Petzval's sum and the full length of the objective lens system is rendered excessive as compared with the focal length if the value $(\phi_1 + \phi_2) /\phi$ exceeds 115 % of the value $L^\bullet \phi$, while it is difficult to attain a telecentric property if the value $(\phi_1 + \phi_2) /\phi$ is less than 105 % of the value $L^\bullet \phi$.

An absolute value $|\phi_{2+}/ \phi_{2-}|$ set to be less than 1.2 and in excess of 0.9. This is because correction of chromatic aberration is rendered difficult if the absolute value $|\phi_{2+}/\phi_{2-}|$ is out of this region, and correction of spherical aberration is rendered insufficient if the absolute value $|\phi_{2+}/\phi_{2-}|$ exceeds 1.2 while correction is rendered excessive and the curvature of the image surface is increased if the absolute value $|\phi_{2+}/\phi_{2-}|$ is less than 0.9.

According to a first embodiment of the present invention, the first and second lens groups are made of quartz or fluorite, respectively while no adhesive is present between the first snd second lens groups and between the biconcave lens made of quartz and the biconvex lens made of fluorite in the second lens group, whereby the inventive objective lens can transmit not only visible and infrared rays but also ultraviolet and/or far ultraviolet rays. Further, since the second lens group is formed by the biconcave lens made of quartz having negative power and the biconvex lens made of fluorite having positive power, spherical aberration and chromatic aberration can be corrected.

## A-1. First Example

Fig. 4 is an arrangement view showing a first example of an objective lens system according to the first embodiment of the present invention. As shown in Fig. 4, the objective lens system for a microscope comprises a first lens group 21 which is formed by a meniscus lens made of fluorite which has a positive power and a second lens group 22 which is formed by a biconcave lens 23 made of quartz and a biconvex lens 24 made of fluorite. A concave surface 21a of the first lens group 21 is directed to an object side (left-hand side of the figure). These first and second lens groups 21 and 22 are disposed in this order from the object side through air. Further, the biconcave and biconvex lenses 23 and 24 are disposed through air, similarly to the above.

The numerical aperture, image size (diameter) and imaging magnification of the objective lens system shown in Fig. 4 are set at 0.083, 10.6 mm and -10, respectively.

In the first lens group 21, a radius $R_1$ of curvature of the concave surface 21a and a radius $R_2$ of curvature of a surface 21b directed to the image formation side (right-hand side of the figure) are respectively set as follows:

| $R_1$ = -45.00 | $R_2$ = -11.500 |
|---|---|

In the biconcave lens 23 made of quartz, a radius $R_3$ of curvature of a surface 23a directed to the object side and a radius $R_4$ of curvature of a surface 23b directed to the image formation side are respectively set as follows:

| $R_3$ = -17.850 | $R_4$ = 5.00 |
|---|---|

In the biconvex lens 24 made of fluorite, a radius $R_5$ of curvature of a surface 24a directed to the object side and a radius $R_6$ of curvature of a surface 24b directed to the image formation side are respectively set as follows:

| $R_5$ = 5.360 | $R_6$ = -8.350 |
|---|---|

Central thickness values $D_1$, $D_2$ and $D_3$ of the lenses 21, 23 and 24 are respectively set as follows:

| $D_1$ = 4.00 | $D_2$ = 1.00 | $D_3$ = 5.00 |
|---|---|---|

Further, spacing $D_{12}$ between the first lens group 21 and the biconcave lens 23 on an optical axis Y and spacing $D_{23}$ between the biconcave lens 23 and the biconvex lens 24 on the optical axis Y are respectively set as follows:

| $D_{12}$ = 20.60 | $D_{23}$ = 0.20 |
|---|---|

All of the radii $R_1$ to $R_6$ of curvature, the thickness values $D_1$ to $D_3$ and the spacing values $D_{12}$ and $D_{23}$ are in any unit. This also applies to the following description.

In the objective lens system shown in Fig. 4, the power $\phi_1$ of the first lens group 21, the power $\phi_2$ of the second lens group 22, the power $\phi_{2-}$ of the biconcave lens 23, the power $\phi_{2+}$ of the biconvex lens 24, the power $\phi$ of the objective lens system shown in Fig. 4 and the distance L between the object plane and the image side focus of the objective lens system are as follows.

| $\phi_1$ = 0.030513 | $\phi_2$ = 0.025630 |
|---|---|
| $\phi_{2-}$ = -0.126829 | $\phi_{2+}$ = 0.123336 |
| $\phi$ = 0.033333 | L = 45 |

Thus,
$0.35\phi$ = 0.011667
$0.92\phi$ = 0.030667

and it is obvious that the objective lens system satisfies the condition:

$0.35\phi < \phi_2 < 0.92\phi$

Further,

$(\phi_1 + \phi_2)/\phi = 1.684290$

$1.05L\phi = 1.575000$

$1.15L\phi = 1.725000$

and it is obvious that the objective lens system satisfies the condition

$1.05L\phi < (\phi_1 + \phi_2)/\phi < 1.15L\phi$

Further, $|\phi_{2+} / \phi_{2-}| = 0.972456$

and it is obvious that the objective lens system satisfies the condition:

$0.9 < |\phi_{2+} / \phi_{2-}| < 1.2$

Considering the case of applying the objective lens system shown in Fig. 4 to a reflection type microscope, this objective lens system is formed in the so-called infinite correction system. Thus, observed light outgoing from a sample is not imaged independently through the objective lens system, but the objective lens system is combined with an image formation lens system as shown in Fig. 5, for example. Objective lens system according to Examples 2 to 4 as hereinafter described are also combined with the image formation lens system shown in Fig. 5.

Fig. 5 is a block diagram showing the image formation lens system. As shown in Fig. 5, the image formation lens system is formed by a first lens 31 made of fluorite, a second lens 32 made of quartz and a third lens 33 made of quartz, which are successively disposed in this order from an object side (left-hand side of the figure) of the image formation lens system.

In the first lens 31, a radius $r_1$ of curvature of a convex surface 31a directed to the object side and a radius $r_2$ of curvature of a surface 31b directed to the image formation side (right-hand side of the figure) are respectively set as follows:

| $r_1 = 23.000$ | $r_2 = -31.540$ |
|---|---|

In the second lens 32, a radius $r_3$ of curvature of a surface 32a directed to the object side and a radius $r_4$ of curvature of a surface 32b directed to the image formation side are respectively set as follows:

| $r_3 = -23.180$ | $r_4 = 33.710$ |
|---|---|

In the third lens 33, a radius $r_5$ of curvature of a surface 33a directed to the object side and a radius $r_6$ of curvature of a surface 33b directed to the image formation side are respectively set as follows:

| $r_5 = -10.530$ | $r_6 = -13.488$ |
|---|---|

Central thickness values $d_1$, $d_2$ and $d_3$ of the first to third lenses 31 to 33 are respectively set as follows:

$d_1 = d_2 = d_3 = 7.00$

Further, spacing $d_{12}$ between the first and second lenses 31 and 32 on an optical axis Y and spacing $d_{23}$ between the second and third lenses 32 and 33 on the optical axis Y are respectively set as follows:

| $d_{12} = 2.75$ | $d_{23} = 86.40$ |
|---|---|

The radii $r_1$ to $r_6$, the thickness values $d_1$ to $d_3$ and the spacing values $d_{12}$ and $d_{23}$ are in any unit.

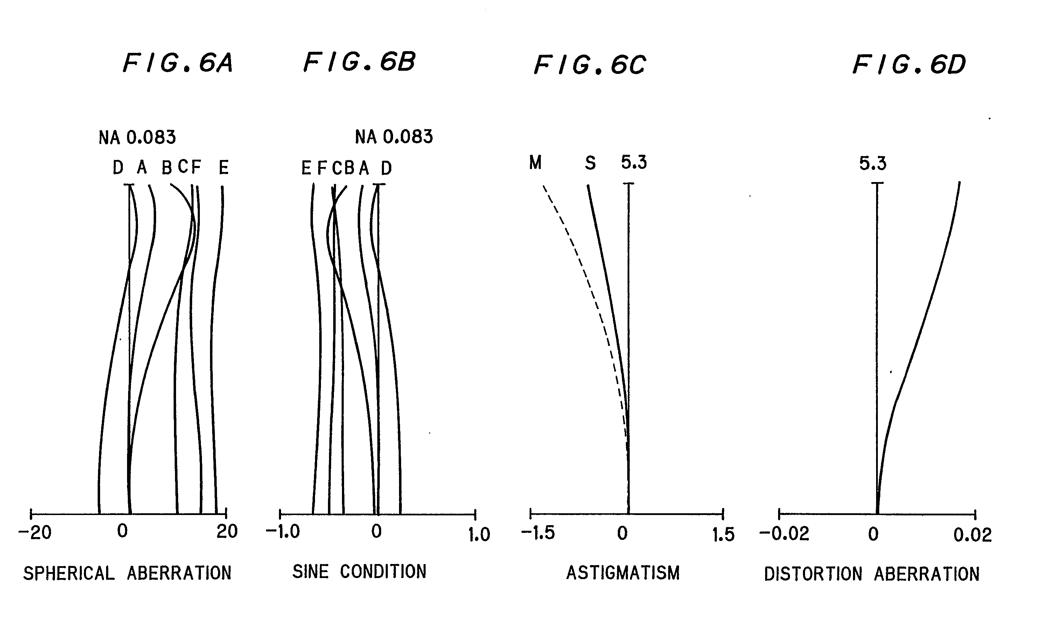

Figs. 6A, 6B, 6C and 6D illustrate spherical aberration, sine condition, astigmatism and distortion aberration of the objective lens system for a microscope having the aforementioned structure. The results shown in Figs. 6A and 6D are obtained through computer simulation based on the aforementioned data, respectively.

Referring to Fig. 6A, the horizontal axis represents aberration values and the vertical axis represents aperture numbers. Referring to Fig. 6B, the horizontal axis represents sine values and the vertical axis represents numerical apertures. Referring to Figs. 6A and 6D, symbols A to F represent simulation results with respect to rays having wavelengths of 298.06 (nm), 202.54 (nm), 398.84 (nm), 253.70 (nm), 587.56

7

EP 0 347 838 A2

(nm) and 800.00 (nm), respectively. Referring to Fig. 6C, the horizontal axis represents aberration values and the vertical axis represents image height values. The dotted line in Fig. 6C shows astigmatism of a meridional image surface with respect to the ray (symbol A) having wavelength of 298.06 nm, and the solid line in Fig. 6C shows astigmatism of a sagital image surface with respect to that. Referring to Fig. 6D, the horizontal axis represents aberration values and the vertical axis represents image height values. The solid line in Fig. 6D show distortion aberration with respect to the ray (symbol A) having wavelength of 298.06 nm.

In the following Examples 2 to 4, wavelength etc. are shown through only the aforementioned symbols, and description thereof is omitted.

A-2. Second Example

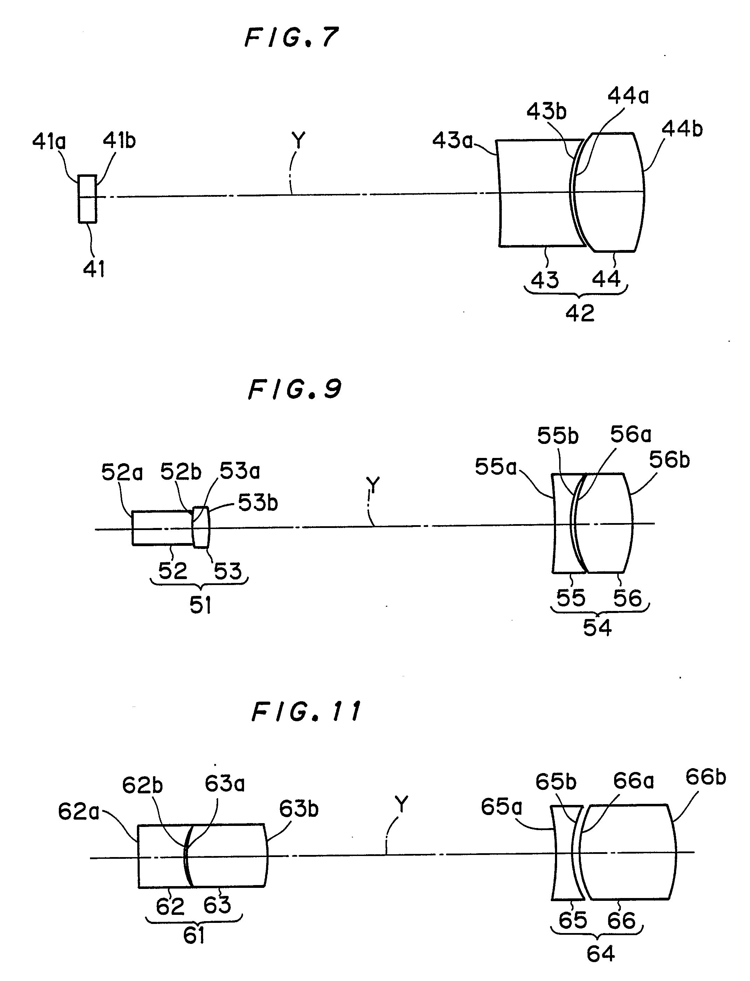

Fig. 7 is an arrangement view showing a second example of the objective lens system according to the first embodiment of the present invention. The objective lens system according to the second example is different from the first example in the point which a meniscus lens forming a first lens group 41 is made of quartz instead of fluorite, but is indentical in a sturcture thereto, as shown in Fig. 7. Therefore, redundant description is omitted.

The numerical aperture, image size (diameter) and imaging magnification of the second example are set at that of the first example, respectively.

In the first lens group 41, a radius $R_1$ of curvature of the concave surface 41a and a radius $R_2$ of curvature of a surface 41b directed to the image formation side (right-hand side of the figure) are respectively set as follows:

| $R_1$ = -44.300 | $R_2$ = -13.830 |
|---|---|

In a biconcave lens 43, a radius $R_3$ of curvature of a surface 43a directed to the object side and a radius $R_4$ of curvature of a surface 43b directed to the image formation side are respectively set as follows.

| $R_3$ = -44.710 | $R_4$ = 5.400 |
|---|---|

In a biconvex lens 44, a radius $R_5$ of curvature of a surface 44a directed to the object side and a radius $R_6$ of curvature of a surface 44b directed to the image formation side are respectively set as follows:

| $R_5$ = 5.613 | $R_6$ = -10.060 |
|---|---|

Central thickness values $D_1$, $D_2$ and $D_3$ of the lenses 41, 43 and 44 are respectively set as follows:

| $D_1$ = 1.00 | $D_2$ = 3.75 | $D_3$ = 3.80 |
|---|---|---|

Further, spacing $D_{12}$ between the first lens group 41 and the biconcave lens 43 on an optical axis Y and spacing $D_{23}$ between the biconcave lens 43 and the biconvex lens 44 on the optical axis Y are respectively set as follows

| $D_{12}$ = 21.40 | $D_{23}$ = 0.16 |
|---|---|

In the objective lens system shown in Fig. 7, the power $\phi_1$ of the first lens group 41, the power $\phi_2$ of the second lens group 42, the power $\phi_{2-}$ of the biconcave lens 43, the power $\phi_{2+}$ of the biconvex lens 44, the power $\phi$ of the objective lens system and the distance L between the object plane and the image side focal point of the objective lens system are as follows:

8

| $\phi_1$ = 0.024550 | $\phi_2$ = 0.030121 |
|---|---|
| $\phi_{2-}$ = -0.103851 | $\phi_{2+}$ = 0.116571 |
| $\phi$ = 0.033333 | L = 45 |

Thus,

$0.35\phi$ = 0.011667

$0.92\phi$ = 0.030667

and it is obvious that the objective lens system satisfies the condition:

$0.35\phi < \phi_2 < 0.92\phi$

Further,

$(\phi_1 + \phi_2)/\phi$ = 1.640123

$1.05L\phi$ = 1.575000

$1.15L\phi$ = 1.725000

and it is obvious that the objective lens system satisfies the condition:

$1.05L\phi < (\phi_1 + \phi_2)/\phi < 1.15L\phi$

Further,

$|\phi_{2+} / \phi_{2-}|$ = 1.122481

and it is obvious that the objective lens system satisfies the condition:

$0.9 < |\phi_{2+} / \phi_{2-}| < 1.2$

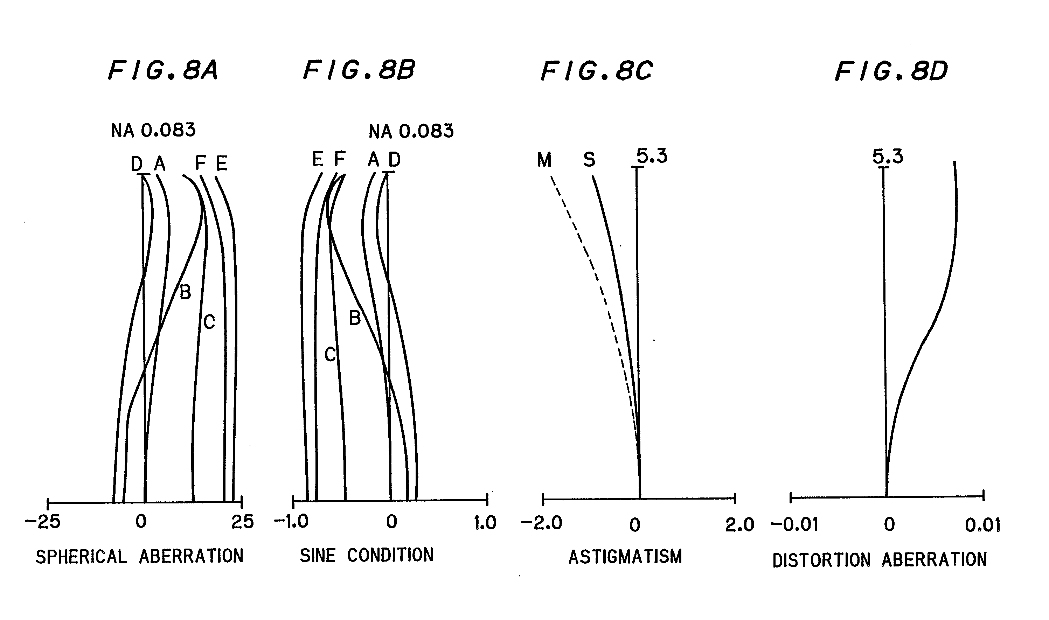

Figs. 8A, 8B, 8C and 8D illustrate spherical aberration, sine condition, astigmatism and distortion aberration of the objective lens system for a microscope shown in Fig. 7. The results shown in Figs. 8A to 8D are obtained through computer simulation based on the aforementioned data, respectively.

A-3. Effect

As understood from Figs. 6A, 6B, 8A and 8B, aberration is small with respect to both of rays in ultraviolet and far ultraviolet regions, in each Example. It is further understood that aberration with respect to rays (symbols A, B and D) in a far ultraviolet region having wavelengths shorter than 300 nm is smaller than aberration with respect to ray (symbol C) in an ultraviolet region having a wavelength longer than 300 nm. Thus, it is obvious that the respective objective lens system shown in Figs. 4 and 7 are effectively employable in a far ultraviolet region. Further, it is clear that aberration is small also with respect to rays (symbols E and $\bar{F}$) in visible and infrared regions. Thus, the respective objective lens system are employable within a range of infrared to far ultraviolet regions.

In addition, it is obvious from Figs. 6C, 6D, 8C and 8D that aberration is small in astigmatism and distortion aberration, respectively.

B. Second Embodiment

An objective lens system for a microscope according to a second embodiment of the present invention comprises: a first lens group formed by a first lens having a negative power and a first biconvex lens; and a second lens group formed by a biconcave lens made of quartz and a biconvex lesn made of fluorite. The first lens is of a first biconcave lens made of quartz or fluorite, or is of a lens in the form of meniscus made of quartz having a concave surface which is directed to an object. These first lens, first biconvex lens, biconcave lens and biconvex lens are arranged in this order from an object side toward an image formation side through air.

The aforementioned objective lens system satisfies the following conditions:

$\phi_1 > 0$

$\phi_2 > 0$

$0.35\phi < \phi_2 < 0.9\phi$

$1.05L\phi < (\phi_1 + \phi_2)/\phi < 1.15L\phi$

$1.45 < |\phi_{1+} / \phi_{1-}| < 1.65$

$0.8 < |\phi_{2+} / \phi_{2-}| < 1.1$

where

$\phi_1$ : power of first lens group

$\phi_2$ : power of second lens group

9

$\phi$ : power of objective lens system

L : distance between object plane and image side focal point of lens system

$\phi_1 +$: power of first biconvex lens forming first lens group

$\phi_1 -$: power of first lens forming first lens group

$\phi_2 +$: power of second biconvex lens forming second lens group

$\phi_2 -$: power of second biconcave lens forming second lens group

The power $\phi_2$ of the second lens group is set to be less than 90 % and in excess of 35 % of the power $\phi$ of the objective lens system. This is because the working distance is reduced if the power $\phi_2$ exceeds 90 % of the power $\phi$ while the full length of the objective lens system is rendered excessive as compared with the focal length if the power $\phi_2$ is less than 35 % of the power.

A value $(\phi_1 + \phi_2)/\phi$ is set to be less than 115 % and in excess of 105 % of a value obtained by multiplying the power $\phi$ of the objective lens system the distance L between the object plane and the image side focus of the objective lens system. This is because the curvature of an image surface is excessively increased due to increase in a Petzval's sum and the full length of the objective lens system is rendered excessive as compared with the focal length if the value $(\phi_1 + \phi_2)/\phi$ exceeds 115 % of the value $L \cdot \phi$, while it is difficult to attain a telecentric property if the value $(\phi_1 + \phi_2)/\phi$ is less than 105 % of the value $L \cdot \phi$.

An absolute value $| \phi_1 +/ \phi_1 -|$ is set to be less than 1.65 and in excess of 1.45. This is because correction of chromatic aberration is rendered difficult if the absolute value $| \phi_1 +/\phi_1 -|$ is out of this region and correction of spherical aberration is rendered insufficient if the absolute value $| \phi_1 +/\phi_1 - |$, exceeds 1.65 while correction is rendered excessive and the curvature of the image surface is increased if the absolute value $| \phi_1 +/\phi_1 -|$ is less than 1.45.

An absolute value $|\phi_2 +/ \phi_2 -|$ is set to be less than 1.1 and in excess of 0.8. This is because correction of chromatic aberration is rendered difficult if the absolute value $|\phi_2 +/\phi_2 -|$ is out of this region and correction of spherical aberration is rendered insufficient if the absolute value $|\phi_2 +/\phi_2 -|$ exceeds 1.1 while correction is rendered excessive and the curvature of the image surface is increased if the absolute value $|\phi_2 +/\phi_2 -|$ is less than 0.8.

The absolute value $|\phi_1 +/\phi_1 -|$ is different in a range from the absolute value $|\phi_2 +/\phi_2 - |$. That is because it is necessary to correct the aberration of the first and second lens groups separately since an effective aperture of the first lens group is larger than that of the second lens group, it is further desirable to simultaneously correct the aberration thereof.

In order to correct chromatic aberration, it is desirable that the positive lens forming the first lens group is formed by a convex lens made of fluorite. In the first lens group being close to the object side, however, the effective aperture thereof is small, whereby the influence of the first lens group on the chromatic aberration is small. Thus, the correction of the chromatic aberration is not always required Accordingly, the positive lens is formed by a convex lens made of quartz instead of the convex lens made of fluorite on which it is difficult to work.

According to a second embodiment of the present invention, the first and second lens groups are made of quartz or fluorite, respectively while no adhesive is present between the first lens and the first biconvex lens, between the first biconvex lens and the second biconcave lens and between the second biconcave lens and the second biconvex lens, whereby the inventive objective lens system can transmit not only visible and infrared rays but also ultraviolet and/or far ultraviolet rays.

Further, since the first and second lens groups are formed by the lens having negative power and the lens having positive power, respectively, spherical aberration and chromatic aberration can be corrected.

B-1. Third Example

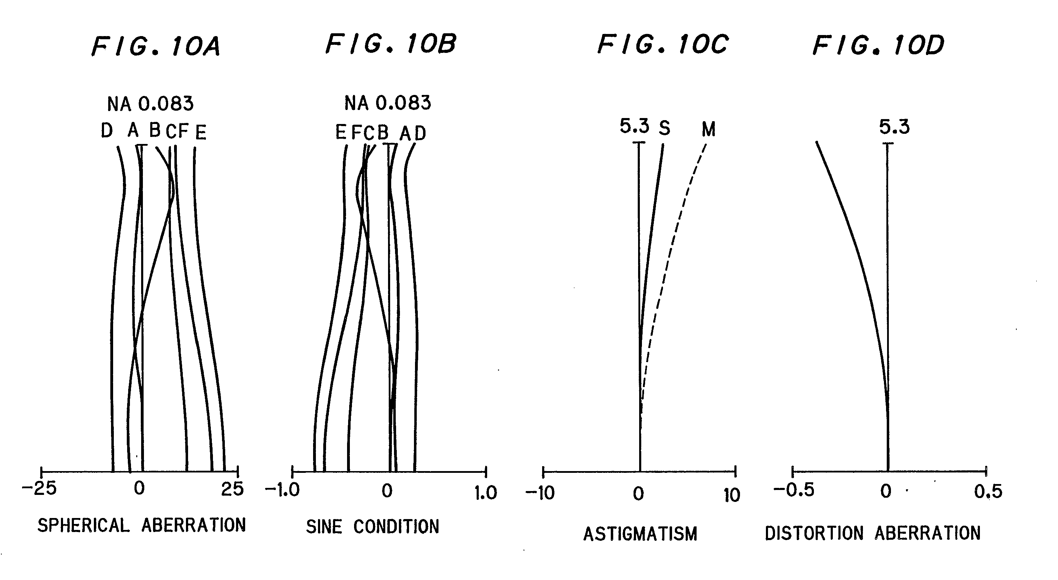

Fig. 9 is an arrangement view showing an example of an objective lens system according to the second embodiment of the present invention. As shown in Fig. 9, the objective lens system for a microscope comprises a first lens group 51 and a second lens group 54. The first lens group is formed by a meniscus lens 52 made of quartz which has a negative power and a biconvex lens 53 made of quartz while the second lens group 54 is formed by a biconcave lens 55 made of quartz and a biconvex lens 56 made of fluorite. A convex surface 52a of the meniscus lens 52 is directed to an object side (left-hand side of the figure). Further, the meniscus lens 52, the biconvex lens 53, the biconcave lens 55 and the biconvex lens 56 are successively disposed in this order from the object side through air.

The numerical aperture, image size (diameter) and imaging magnification of the objective lens system shown in Fig. 9 are set at 0.083, 10.6 mm and -10, respectively.

10

In the meniscus lens 52 made of quartz, a radius $R_1$ of curvature of the convex surface 52a and a radius $R_2$ of curvature of a surface 52b directed to the image formation side (right-hand side of the figure) are respectively set as follows:

| $R_1$ = 17.430 | $R_2$ = 5.200 |
|---|---|

In the biconvex lens 53 made of quarz, a radius $R_3$ of curvature of a surface 53a directed to the object side and a radius $R_4$ of curvature of a surface 53b directed to the image formation side are respectively set as follows:

| $R_3$ = 22.800 | $R_4$ = -7.260 |
|---|---|

In the biconcave lens 55 made of quarz, a radius $R_5$ of curvature of a surface 55a directed to the object side and a radius $R_6$ of curvature of a surface 55b directed to the image formation side are respectively set as follows:

| $R_5$ = -17.550 | $R_6$ = 5.300 |
|---|---|

In the biconvex lens 56 made of fluorite, a radius $R_7$ of curvature of a surface 56a directed to the object side and a radius $R_8$ of curvature of a surface 56b directed to the image formation side are respectively set as follows:

| $R_7$ = 5.700 | $R_8$ = -7.600 |
|---|---|

Central thickness values $D_1$, $D_2$, $D_3$ and $D_4$ of the lenses 52, 53, 55 and 56 are respectively set as follows:

| $D_1$ = 3.50 | $D_2$ = 1.00 |
|---|---|
| $D_3$ = 0.90 | $D_4$ = 3.60 |

Further, spacing $D_{12}$ between the the meniscus lens 52 and the biconvex lens 53 on an optical axis Y, spacing $D_{23}$ between the biconvex lens 53 and the biconcave lens 55 on the optical axis Y and spacing $D_{34}$ between the biconcave lens 55 and the biconvex lens 56 on the optical axis Y are respectively set as follows:

| $D_{12}$ = 0.10 | $D_{23}$ = 20.50 | $D_{34}$ = 0.20 |
|---|---|---|

All of the radii $R_1$ to $R_8$ of curvature, the thickness values $D_1$ to $D_4$ and the spacing values $D_{12}$ and $D_{34}$ are in units of millimeters. This also applies to the following description.

In the objective lens system shown in Fig. 9, the power $\phi_1$ of the first lens group 51, the power $\phi_2$ of the second lens group 54, the power $\phi_{1-}$ of the meniscus lens 52 forming the first lens group 51, the power $\phi_{1+}$ of the biconvex lens 53 forming the first lens group 51, the power $\phi_{2-}$ of the biconcave lens 55 forming the second lens group 54, the power $\phi_{2+}$ of the biconvex lens 56 forming the second lens group 54, the power $\phi$ of the objective lens system and the distance L between the object plane and the image side focal point of the lens system are as follows:

| $\phi_1$ = 0.025453 | $\phi_2$ = 0.029426 |
|---|---|
| $\phi_{1-}$ = -0.059710 | $\phi_{1+}$ = 0.087720 |
| $\phi_{2-}$ = -0.121523 | $\phi_{2+}$ = 0.127712 |
| $\phi$ = 0.033333 | L = 45 |

11

Thus,

$0.35\phi = 0.011667$

$0.9\ \phi = 0.030000$

and it is obvious that the objective lens system satisfies the condition:

$0.35\phi < \phi_2 < 0.9\phi$

Further, $(\phi_1 + \phi_2)/\phi = 1.646370$

$1.05L\phi = 1.575000$

$1.15L\phi = 1.725000$

and it is obvious that the objective lens system satisfies the condition:

$1.05L\phi < (\phi_1 + \phi_2)/\phi < 1.15L\phi$

Further,

$|\phi_{1+} / \phi_{1-}| = 1.469101$

and it is obvious that the objective lens system satisfies the condition:

$1.45 < |\phi_{1+} / \phi_{1-}| < 1.65$

Further,

$|\phi_{2+} / \phi_{2-}| = 1.050929$

and it is obvious that the objective lens system satisfies the condition:

$0.8 < |\phi_{2+} / \phi_{2-}| < 1.1$

Figs. 10A, 10B, 10C and 10D illustrate spherical aberration, sine condition, astigmatism and distortion aberration of the objective lens system for a microscope having the aforementioned structure. The results shown in Figs. 10A to 10D are obtained through computer simulation based on the aforementioned data, respectively.

## B-2. Fourth Example

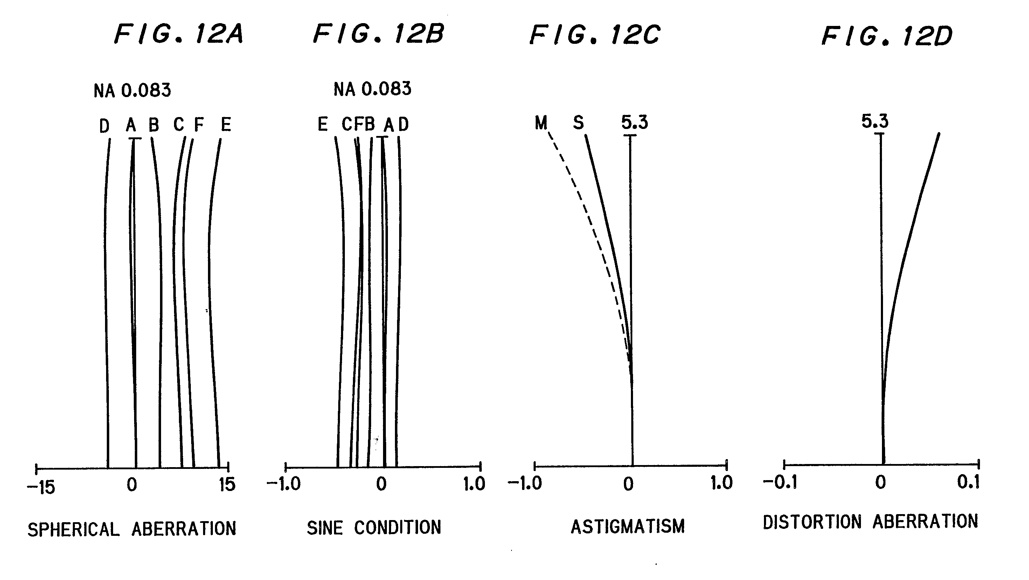

Fig. 11 an arrangement view showing another example of an objective lens system according to the second embodiment of the present invention. The objective lens system according to a fourth example is different from the third example in the point which a biconvex lens 63 forming a first lens group 61 is made of fluorite instead of quarz, but is identical in a structure thereto, as shown in Fig. 11. Therefore, redundant description is omitted.

The numerical aperture, image size (diameter) and imaging magnification of the second example are set at that of the third example, respectively.

In a meniscus lens 62 made of quartz, a radius $R_1$ of curvature of the convex surface 62a and a radius $R_2$ of curvature of a surface 62b directed to the image formation side (right-hand side of the figure) are respectively set as follows:

| $R_1 = 49.692$ | $R_2 = 6.062$ |
|---|---|

In the biconvex lens 63 made of fluorite, a radius $R_3$ of curvature of a surface 63a directed to the object side and a radius $R_4$ of curvature of a surface 63b directed to the image formation side are respectively set as follows:

| $R_3 = 6.062$ | $R_4 = -11.980$ |
|---|---|

In a biconcave lens 65 made of quartz, a radius $R_5$ of curvature of a surface 65a directed to the object side and a radius $R_6$ of curvature of a surface 65b directed to the image formation side are respectively set as follows:

| $R_5 = -12.992$ | $R_6 = 6.328$ |
|---|---|

In a biconvex lens 66 made of fluorite, a radius $R_7$ of curvature of a surface 66a directed to the object side and a radius $R_8$ of curvature of a surface 66b directed to the image formation side are respectively set as follows:

12

| $R_7$ = 7.288 | $R_8$ = -9.253 |

Central thickness values $D_1$, $D_2$, $D_3$ and $D_4$ of the lenses 62, 63, 65 and 66 are respectively set as follows:

| $D_1$ = 3.00 | $D_2$ = 5.00 |
| $D_3$ = 1.00 | $D_4$ = 6.00 |

Further, spacing $D_{12}$ between the the meniscus lens 62 and the biconvex lens 63 on an optical axis Y, spacing $D_{23}$ between the biconvex lens 63 and the biconcave lens 65 on the optical axis Y and spacing $D_{34}$ between the biconcave lens 65 and the biconvex lens 66 on the optical axis Y are respectively set as follows:

| $D_{12}$ = 0.10 | $D_{23}$ = 17.75 | $D_{34}$ = 0.45 |

In the objective lens system shown in Fig. 11, the power $\phi_1$ of the first lens group 61, the power $\phi_2$ of the second lens group 64, the power $\phi_{1-}$ of the meniscus lens 62 forming the first lens group 61, the power $\phi_{1+}$ of the biconvex lens 63 forming the first lens group 61, the power $\phi_{2-}$ of the biconcave lens 65 forming the second lens group 64, the power $\phi_{2+}$ of the biconvex lens 66 forming the second lens group 64, the power $\phi$ of the objective lens system and the distance L between the object plane and the image side focal point of the lens system are as follows:

| $\phi_1$ = 0.041662 | $\phi_2$ = 0.013444 |
| $\phi_{1-}$ = -0.069139 | $\phi_{1+}$ = 0.103115 |
| $\phi_{2-}$ = -0.116715 | $\phi_{2+}$ = 0.098827 |
| $\phi$ = 0.033333 | L = 45 |

Thus,
$0.35\phi$ = 0.011667
$0.9\ \phi$ = 0.030000
and it is obvious that the objective lens satisfies the condition:
$0.35\phi < \phi_2 < 0.9\phi$
    Further,
$(\phi_1 + \phi_2)/\phi$ = 1.653180
$1.05L\phi$ = 1.575000
$1.15L\phi$ = 1.725000
and it is obvious that the objective lens satisfies the condition:
$1.05L\phi < (\phi_1 + \phi_2)/\phi < 1.15L\phi$
    Further,
$|\ \phi_{1+}\ /\ \phi_{1-}\ |$ = 1.491416
and it is obvious that the objective lens satisfies the condition:
$1.45 < |\ \phi_{1+}\ /\ \phi_{1-}\ | < 1.65$
    Further,
$|\ \phi_{2+}\ /\ \phi_{2-}\ |$ = 0.846738
and it is obvious that the objective lens satisfies the condition:
$0.8 < |\ \phi_{2+}\ /\ \phi_{2-}\ | < 1.1$

Figs. 12A, 12B, 12C and 12D illustrate spherical aberration, sine condition, astigmatism and distortion aberration of the objective lens system for a microscope having the aforementioned structure. The results shown in Figs. 12A to 12D are obtained through computer simulation based on the aforementioned data, respectively.

B-3. Effect

As understood from Figs. 10A, 10B, 10C, 10D, 12A, 12B, 12C and 12D, an effect similar to that of the first embodiment can be attained.

## C. Other

Although the first lens group is formed by the meniscus lens having a negative power and the biconvex lens in the second embodiment, the first lens group may be formed by the aforementioned biconvex lens and a biconcave lens made of quartz. In this case, since the biconcave lens forming the first lens group is made of quartz, an effect similar to that of the first and second embodiments can be attained.

## D. System for Measuring Film Thickness

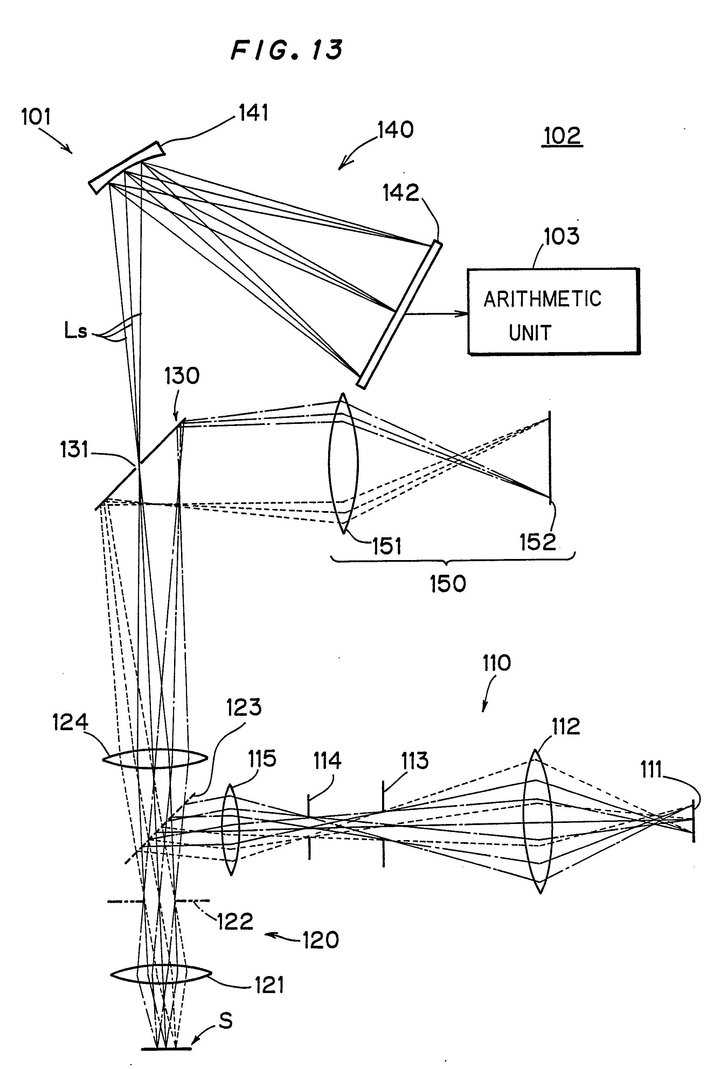

Fig. 13 is a schematic block diagram showing a system for measuring film thickness 102. As shown in Fig. 13, the system 102 comprises a microspectroscope 101 for detecting spectrum of a sample to be measured and an arithmetic unit 103 for operating the film thickness of the measured sample S on the basis of spectral data obtained by the microspectroscope 101. The microspectroscope 101 is formed by an illuminating optical system 110, a microscopic optical system 120, a reflecting mirror 130, a spectroscopic unit 140, and a monitoring optical system 150.

The illuminating optical system 110 is formed by a light source 111 for projecting light which has ultraviolet and far ultraviolet rays at least, a condenser lens 112, an aperture stop 113, a field stop 114 and another condenser lens 115, so that illuminating light outgoing from the light source 111 is guided to the microscopic optical system 120 through the condenser lens 112, the aperture stop 113, the field stop 114 and the condenser lens 115.

The microscopic optical system 120 is formed by an objective lens 121 which is identical to that shown in Fig. 4, an image-formation lens 124 which is identical to that shown in Fig. 5 and a beam splitter 123 provided between the objective lens 121 and the image-formation lens 124. Symbol 122 denotes a pupil position of the objective lens 121.

The illuminating light outgoing from the light source 111 passes through the condenser lens 112, the aperture stop 113, the field stop 114 and the condenser lens 115, and is guided to the objective lens 121 by the beam splitter 123. The illuminating light transmitted through the objective lens 121 is applied onto the surface of a measured sample S which is supported by a sample holder (not shown).

Reflected light reflected by the surface of the measured sample S is enlarged and imaged in a position close to the reflecting mirror 130 through the objective lens 121, the beam splitter 123 and the image-formation lens 124.

The reflecting mirror 130 is provided with a pinhole 131. Within the reflected light, therefore, reflected light $L_S$ passing through the pinhole 131 is taken in the spectroscopic unit 140.

The spectroscopic unit 140 is formed by a diffraction grating 141 for separating the reflected light $L_S$ into spectral components and a photo detector 142 for detecting the spectrum of the light spectrally diffracted by the diffraction grating 141. The diffraction grating 141 may be prepared by a flat field type diffraction grating which images a spectrum on a flat plane, for example. Alternatively, the diffraction grating may be prepared by that having a sweeper. The photo detector 142, which is formed by a photodiode array or a CCD, for example, is conjugated with the pinhole 131. Alternatively, the photo detector 142 may be prepared by a photomultiplier.

Since the spectroscopic unit 140 has the aforementioned structure, the reflected light $L_S$ taken in the spectroscopic unit 140 is separated into its spectral components by the diffraction grating 141, and the respective spectral components of the light $L_S$ are received by the photo detector 142, which in turn outputs a signal corresponding to the spectrum of the light $L_S$.

Within the reflected light, on the other hand, that reflected by the reflecting mirror 130 enters the monitoring optical system 150, and imaged on an image-formation position 152 through a relay lens 151. Thus, an enlarged image of the surface of the measured sample S is imaged on an image-formation plane, so that the measuring position of the sample S can be confirmed and focusing can be performed on the basis of the enlarged image.

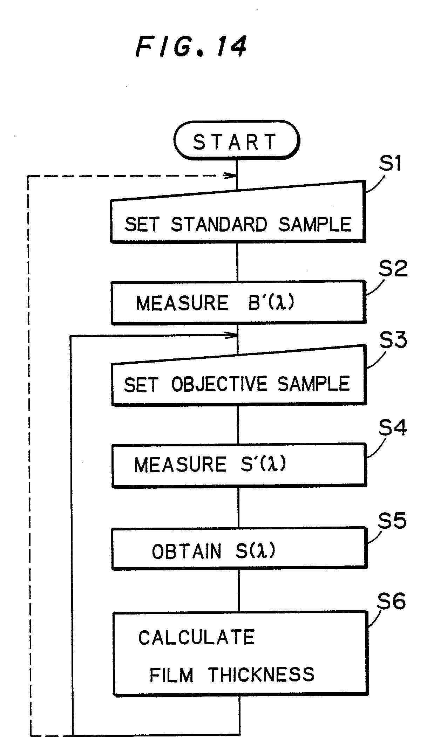

Fig. 14 is a flow chart showing a method of measuring film thickness by the measuring system 102. In advance of measurement by the measuring system 102, an operator previously inputs spectrum data $B(\lambda)$ of a sample (hereinafter referred to as "standard sample"), whose spectrum data is known, in the arithmetic unit 103 through a keyboard (not shown), to store the data in a memory (not shown) provided in the arithmetic unit 103. The standard sample may be prepared by a silicon substrate, a substrate which is deposited with aluminum on its surface, or the like.

Then the operator sets the standard sample on the sample holder of the microspectroscope 101 (step S1), and supplies a command outputted for detecting calibration data to the arithmetic unit 103. In response to a command from the arithmetic unit 103, the microspectroscpe 101 detects the spectrum of the standard sample, to store data $B'(\lambda)$ relating to the spectrum in the memory of the arithmetic unit 103 (step S2).

Then, the operator takes out the standard sample from the sample holder of the microspectroscope 101 and sets the measured sample S on the sample holder of the microspectroscope 101 (step S3). Thereafter the operator supplies a command for starting measurement to the arithmetic unit 103, so that the microspectroscope 101 detects the spectrum of the measured sample S in response to a command outputted from the arithmetic unit 103, to store data $S'(\lambda)$ relating to the spectrum thereof in the memory of the arithmetic unit 103 (step S4).

At a step S5, the data $S'(\lambda)$, $B(\lambda)$ and $B'(\lambda)$ stored in the memory are read in the arithmetic unit 103, to obtain data $S(\lambda)$ in accordance with the following expression:

$$S(\lambda) = \frac{B(\lambda)}{B'(\lambda)} \cdot S'(\lambda) \qquad \ldots (1)$$

The data $S(\lambda)$ corresponds to a signal outputted from the microspectroscope 101 on the assumption that absolutely no influence is caused by the aforementioned factors. In other words, the data $S(\lambda)$ shows the true spectrum of the measured sample S.

On the basis of the data $S(\lambda)$ obtained at the step S5, the arithmetic unit 103 operates the thickness of the thin film (step S6). The principle of operating film thickness is well known in the art, and hence description thereof is omitted.

As understood from the expression (1), the data $S'(\lambda)$ relating to the actually measured spectrum is calibrated in the aforementioned manner to obtain the data $S(\lambda)$ relating to the true spectrum, whereby the film thickness can be accurately measured.

As hereinabove described, the present invention can be applied to the measureing system 102. Further, application of the present invention is not restricted to the system for measuring film thickness but may optical system having an objective lens.

Although the present invention has been described and illustrated in detail, it is clearly understood that the same is by way of illustration and example only and is not to be taken by way of limitation, the spirit and scope of the present invention being limited only by the terms of the appended claims.

The features disclosed in the foregoing description, in the claims and/or in the accompanying drawings may , both, separately and in any combination thereof, be material for realising the invention in diverse forms thereof.

**Claims**

1. An objective lens system for a microscope comprising:
a first lens group including a lens in the form of meniscus made of quartz or fluorite having a concave surface which is directed to an object, said meniscus lens having a positive power; and
a second lens group including a biconcave lens made of quartz and a biconvex lens made of fluorite, said first lens group, said biconcave and biconvex lenses being successively disposed in order from the object side of the objective lens system through air.

2. An objective lens system as recited in claim 1, wherein
the objective lens system satisfies the following:

$\phi_1 > 0$

$\phi_2 > 0$

$0.35\phi < \phi_2 < 0.92\phi$

$1.05L\phi < (\phi_1 + \phi_2)/\phi < 1.15L\phi$

$0.9 < |\phi_{2+}/\phi_{2-}| < 1.2$

where $\phi_1$, $\phi_2$ and $\phi$ are a power of said first lens group, said second lens group and the objective lens system, respectively; L is a distance between the object and focal point in the image formation side of the objective lens system ; and $\phi_{2+}$, $\phi_{2-}$ are a power of said biconvex lens and said biconcave lens, respectively.

3. An objective lens system for a microscope comprising:
a first lens group including a first lens made of quartz having a negative power and a first biconvex lens made of quartz or fluorite, said first lens being of a first biconcave lens or being of a lens in the form of meniscus having a convex surface which is directed to an object; and
a second lens group including a second biconcave lens made of quartz and a second biconvex lens made of fluorite, said first lens, said first biconvex lens, said second biconcave lens and said second biconvex lens being successively disposed in order from the object side of the objective lens through air.

4. An objective lens system as recited in claim 3, wherein
the objective lens system satisfies the following:
$\phi_1 > 0$
$\phi_2 > 0$
$0.35\phi < \phi_2 < 0.9\phi$
$1.05L\phi < (\phi_1 + \phi_2)/\phi < 1.15L\phi$
$1.45 < |\phi_{1+} / \phi_{1-}| < 1.65$
$0.8 < |\phi_{2+} / \phi_{2-}| < 1.1$
where $\phi_1$, $\phi_2$ and $\phi$ are a power of said first lens group, said second lens group and the objective lens system, respectively; L is a distance between the object and focal point in the image formation side of the objective lens system; $\phi_{1+}$, $\phi_{1-}$ are a power of said first biconvex lens and said first lens, respectively; and $\phi_{2+}$, $\phi_{2-}$ are a power of said second biconvex lens and said second biconcave lens, respectively.

5. An apparatus for measuring thickness of a film which is formed on a sample comprising:
a light source for illuminating said sample, said light source projecting light having ultraviolet and/or far ultraviolet rays;
a microscopic optical system for imaging observed light outgoing from said sample, said microscopic optical system having an objective lens system comprising: a first lens group including a lens in the form of meniscus made of quartz or fluorite having a concave surface which is directed to an object, said meniscus lens having a positive power; and a second lens group including a biconcave lens made of quartz and a biconvex lens made of fluorite, said first lens group, said biconcave and said biconvex lenses being successively disposed in order from the object side of the objective lens system through air; the objective lens system satisfying the following:
$\phi_1 > 0$
$\phi_2 > 0$
$0.35\phi < \phi_2 < 0.92\phi$
$1.05L\phi < (\phi_1 + \phi_2) / \phi < 1.15L\phi$
$0.9 < |\phi_{2+} / \phi_{2-}| < 1.2$
where $\phi_1$, $\phi_2$ and $\phi$ are a power of said first lens group, said second lens group and the objective lens system, respectively; L is a distance between the object and focal point in the image formation side of the objective lens system ; and $\phi_{2+}$, $\phi_{2-}$ are a power of said biconvex lens and said biconcave lens, respectively;
spectroscopic means for taking in said observed light through said microscopic optical system and separating said observed light into spectral components;
detector means for detecting the spectrum of said observed light separated into spectral components by said specroscopic means; and
arithmetic means for obtaining thickness of said film on the basis of data outputted from said detector means.

6. An apparatus for measuring thickness of a film which is formed on a sample comprising:
a light source for illuminating said sample, said light source projecting light having ultraviolet and/or far ultraviolet rays;
a microscopic optical system for imaging observed light outgoing from said sample, said microscopic optical system having an objective lens system comprising: a first lens group including a first lens made of quartz having a negative power and a first biconvex lens meade of quartz or fluorite, said first lens being of a first biconcave lens or being of a lens in the form of meniscus having a convex surface which is directed to an object; and a second lens group including a second biconcave lens made of quartz and a second biconvex lens made of fluorite, said first lens, said first biconvex lens, said second biconcave lens and said second biconvex lens being successively disposed in order from the object side of the objective lens through air, the objective lens system satisfying the following:
$\phi_1 > 0$

$\phi_2 > 0$

$0.35\phi < \phi_2 < 0.9\phi$

$1.05L\phi < (\phi_1 + \phi_2)/\phi < 1.15L\phi$

$1.45 < |\phi_{1+} / \phi_{1-}|, < 1.65$

$0.8 < |\phi_{2+} / \phi_{2-}| < 1.1$

where $\phi_1$, $\phi_2$ and $\phi$ are a power of said first lens group, said second lens group and the objective lens system, respectively; L is a distance between the object and focal point in the image formation side of the objective lens system; $\phi_{1+}$, $\phi_{1-}$ are a power of said first biconvex lens and said first lens, respectively; and $\phi_{2+}$, $\phi_{2-}$ are a power of said second biconvex lens and said second biconcave lens, respectively;

spectroscopic means for taking in said observed light through said microscopic optical system and separating said observed light into spectral components;

detector means for detecting the spectrum of said observed light separated into spectral components by said specroscopic means; and

arithmetic means for obtaining thickness of said film on the basis of data outputted from said detector means.

FIG.1

FIG.2

**FIG.3**

**FIG.4**

**FIG.5**

FIG.6A  FIG.6B  FIG.6C  FIG.6D

FIG.7

FIG.9

FIG.11

FIG.8A

NA 0.083

SPHERICAL ABERRATION

FIG.8B

NA 0.083

SINE CONDITION

FIG.8C

ASTIGMATISM

FIG.8D

DISTORTION ABERRATION

FIG.10A

NA 0.083
D A BCF E

-25    0    25

SPHERICAL ABERRATION

FIG.10B

NA 0.083
E FCB AD

-1.0    0    1.0

SINE CONDITION

FIG.10C

5.3 S   M

-10    0    10

ASTIGMATISM

FIG.10D

5.3

-0.5    0    0.5

DISTORTION ABERRATION

EP 0 347 838 A2

EP 0 347 838 A2

*FIG. 12A*

NA 0.083

D A B C F E

-15　　0　　15

SPHERICAL ABERRATION

*FIG. 12B*

NA 0.083

E CFB A D

-1.0　　0　　1.0

SINE CONDITION

*FIG. 12C*

M S 5.3

-1.0　　0　　1.0

ASTIGMATISM

*FIG. 12D*

5.3

-0.1　　0　　0.1

DISTORTION ABERRATION

# FIG. 13

## FIG. 14

START

SET STANDARD SAMPLE — S1

MEASURE $B'(\lambda)$ — S2

SET OBJECTIVE SAMPLE — S3

MEASURE $S'(\lambda)$ — S4

OBTAIN $S(\lambda)$ — S5

CALCULATE FILM THICKNESS — S6